Europäisches Patentamt

European Patent Office

Office européen des brevets

(11) Publication number: **0 139 756**
**B1**

(12) **EUROPEAN PATENT SPECIFICATION**

(45) Date of publication of patent specification: **19.09.90**

(51) Int. Cl.⁵: **H 01 M 4/38, H 01 M 4/40,
H 01 M 4/42, H 01 M 4/44**

(21) Application number: **84901017.8**

(22) Date of filing: **06.03.84**

(86) International application number:
**PCT/JP84/00088**

(87) International publication number:
**WO 84/03591 13.09.84 Gazette 84/22**

(54) **RECHARGEABLE ELECTROCHEMICAL APPARATUS AND NEGATIVE POLE THEREFOR.**

| | |
|---|---|
| (30) Priority: **07.03.83 JP 36878/83**<br>**29.08.83 JP 158329/83**<br>**10.02.84 JP 23347/84** | (73) Proprietor: **Matsushita Electric Industrial Co., Ltd.**<br>**1006, Oaza Kadoma**<br>**Kadoma-shi Osaka-fu, 571 (JP)** |
| (43) Date of publication of application:<br>**08.05.85 Bulletin 85/19** | (72) Inventor: **TOYOGUCHI, Yoshinori**<br>**9-4, Honmachi 2-chome Yao-shi**<br>**Osaka-fu 581 (JP)**<br>Inventor: **YAMAURA, Junichi** |
| (45) Publication of the grant of the patent:<br>**19.09.90 Bulletin 90/38** | **5-1-914, Higashiawaji 1-chome**<br>**Higashiyodogawa-ku**<br>**Osaka-shi Osaka-fu 533 (JP)**<br>Inventor: **MATSUI, Tooru**<br>**107, Yakumokitamachi 2-chome Moriguchi-shi** |
| (84) Designated Contracting States:<br>**CH DE FR GB LI** | **Osaka-fu 570 (JP)**<br>Inventor: **IIJIMA, Takashi**<br>**35-26, Yamanoue nishimachi Hirakata-shi**<br>**Osaka-fu 573 (JP)** |
| (56) References cited:<br>**FR-A-2 206 593**<br>**US-A-4 330 601** | |
| **JOURNAL OF THE ELECTROCHEMICAL SOCIETY, vol. 118, no. 10, October 1971, pages 1547-1549; A.N. DEY: "Electrochemical alloying of lithium in organic electrolytes"** | (74) Representative: **Newens, Leonard Eric et al**<br>**F.J. CLEVELAND & CO. 40/43 Chancery Lane**<br>**London WC2A 1JQ (GB)** |

Courier Press, Leamington Spa, England.

## Description

Technical Field

The present invention relates to a rechargeable electrochemical apparatus using nonaqueous electrolyte, more particularly a nonaqueous electrolyte secondary battery, and a rechargeable negative electrode.

Background Art

As nonaqueous electrolyte secondary batteries using alkali metals such as lithium and sodium as the negative electrode, there have been to up date actively pursued the development of those batteries which use, as positive-electrode active material, various intercalation compounds and the like including titanium disulfide ($TiS_2$) and, as electrolyte, organic electrolyte obtained by dissolving lithium perchlorate or the like in an organic solvent such as propylene carbonate. These secondary batteries are featured by a high battery voltage and a high energy density, owing to the use of alkali metals in the negative electrode.

However, the secondary batteries of this kind have not yet been put to practical use up to date. The main reason for this is that the number of times of possible charge-and-discharge is small (charge-and-discharge cycle life is short) and the charge-and-discharge efficiency in charge-and-discharge cycle is low. This is caused largely by deterioration of the negative electrode. The lithium negative electrode mainly used at present comprises plate-formed metallic lithium press-bonded to a screen-formed current collector formed of nickel or the like. During discharging stage, metallic lithium is dissolved into electrolyte as lithium ions. But, in charging stage, it is difficult to precipitate the lithium into plate form as before discharge. Rather, there occurs such phenomena that dendrite-like (aborescent) lithium is formed, which falls off breaking near the root, or the lithium precipitated in small-bead (moss-like) form disconnects itself from the current collector. Consequently, the battery becomes incapable of being charged and discharged. Further, it often occurs that the dentrite-like metallic lithium thus formed penetrates the separator separating the positive electrode from the negative electrode and comes to contact with the positive electrode, causing short-circuit, which results in failure of function of the battery.

Various methods have been tried up to the present to obviate the defects of the negative electrode mentioned above. In general, there are reported methods which comprise altering the material of the negative-electrode current collector to improve its adhesion to the precipitating lithium or methods which comprise adding to the electrolyte an additive for preventing the formation of dentrite-like metal. But these methods are not always effective. As to alteration of the current collector material, it is effective for lithium precipitating directly onto the current collector material; but on further continuation of charge (precipitation), lithium comes to precipitate upon the previously precipitated lithium, whereby the effect of current collector material is lost. As to the additives, also, they are effective in the early stage of charge-and-discharge cycle; but with further repetition of the cycle, most of the additives decompose owing to oxidation-reduction or the like in the battery, thus losing their effectiveness.

More recently, it has been proposed to use an alloy with lithium as the negative electrode. A well known example is lithium-aluminum alloy. In this case, there is disadvantages in that, though a uniform alloy is formed for the time being, the uniformity disappears on repetition of charge and discharge and, particularly when the proportion of lithium is large, the electrode becomes fine-grained and disintegrates. Also, it has been proposed to use a solid solution of silver and alkali metal [Japanese Patent Application Kokai (Laid-open) No. 73,860/81; U.S. Patent Nos. 4,316,777 and 4,330,601]. In this case, it is described that no disintegration occurs as in the aluminum alloy; but only a small amount of lithium goes into alloy in sufficiently high speed, and sometimes metallic lithium precipitates without alloying itself; to avoid this, use of a porous body or the like has been recommended. Accordingly, the charge efficiency is poor; with alloys containing large amount of lithium, the pulverization causd by charge-and-discharge is gradually accelerated, resulting in sharp decrease in cycle life.

Further, there is an idea of using lithium-mercury alloy [Japanese Patent Application Kokai (Laid-open) No. 98.978/82] or that of using lithium-lead alloy [Japanese Patent Application Kokai (Laid-open) No. 141,869/82]. In the case of lithium-mercury alloy, however, the negative electrode changes into mercury metal in the form of liquid particles as the result of discharge, and cannot maintain the form of the electrode. In the case of lithium-lead alloy, the pulverization of the electrode due to charge-and-discharge is more severe than in silver solid solution.

Further, it is conceivable to use lithium-tin or lithium-tin-lead alloy. Also when these alloys are used, the pulverization of the alloy occurs with the increase of the amount of lithium incorporated into alloy by charging, which makes maintaining the form as an electrode impossible.

Thus, there has yet been found no negative electrode rechargeable in nonaqueous electrolyte which can be satisfactorily used in practice.

According to a first aspect of the present invention there is provided a method of forming a rechargeable electrochemical apparatus employing a non-aqueous electrolyte and alkali metal ions for charge transfer, the method including the steps of:—

a) forming a negative electrode for the apparatus,
b) forming a positive electrode,
c) locating the positive and negative electrodes in spaced relationship electrochemically linked by a

non-aqueous electrolyte, characterised in that the negative electrode is formed as a generally homogeneous body from an alloy comprising less than 20% by weight of said alkali metal, zinc or zinc and cadmium, and at least one metal selected from the group consisting of Sn, Pb, In and Bi, and the whole alkali metal contained in the alloy forms intermetallic compounds with other metal components.

According to a second aspect of the present invention there is provided a rechargeable electrochemical apparatus employing a non-aqueous electrolyte and alkali metal ions for charge transfer, the apparatus comprising a positive electrode, a negative electrode, and a non-aqueous electrolyte electrochemically linking said positive and negative electrodes characterised in that the negative electrode is formed as a generally homogenous body from an alloy comprising less than 20% by weight of said alkali metal, zinc or zinc and cadmium, and at least one metal selected from the group consisting of Sn, Pb, In and Bi, and the whole alkali metal contained in the alloy forms intermetallic compounds with other metal components.

When charge-and-discharge is conducted in a non-aqueous electrolyte containing alkali metal ions with above mentioned alloy used as the negative electrode, the electrode absorbs the alkali metal ions in the electrolyte as the result of charge, forming alloy with the alkali metal, and desorbs the absorbed alkali metal into the electrolyte as ions as the result of discharge. Accordingly, charge and discharge can be conducted reversibly. During charging stage there occurs no short-circuit between the positive and negative electrode due to dendrite-like precipitation of the alkali metal on the surface of the negative electrode, nor disintegration of the negative electrode due to pulverization.

Among the component of the alloy mentioned above, zinc plays a role of a so-called binder of preventing pulverization of the negative electrode which would accompany the absorption of the alkali metal caused by charge. Cadmium assists the above role. Bismuth, indium, tin and lead serve to increase the absorbed amount of alkali metal and increase the quantity of electricity in charge and discharge. Accordingly, for applications where the quantity of electricity in charge and discharge is not large and the like in charge and discharge is important, larger proportion of zinc or zinc and cadmium is favorable. On the other hand, for applications where the quantity of electricity is required to be large, the proportion of zinc or zinc and cadmium is preferably not too large.

The mechanism of reaction occurring when the alloy of the present invention is used as the negative electrode is assumed as follows. Thus, it is conceived that, when lithium is used as the alkali metal, during charge lithium ions in the electrolyte react at the alloy surface, forming a kind of intermetallic compound or an alloy of lithium with bismuth, indium, tin or lead in the alloy, and the lithium then diffuses into the alloy of the negative electrode, forming a lithium alloy. Accordingly, the charge reaction takes place at a more noble potential than that of metallic lithium, and absorption of lithium proceeds until the amount of lithium in the alloy reaches saturation and the potential of the alloy becomes equal to that of metallic lithium.

When a tin-zinc alloy comprising 60% by weight of tin and 40% by weight of zinc (hereinafter expressed as [Sn(60) − Zn(40)]) is used, the charge-and-discharge reaction in electrolyte containing lithium ions may be expresed by equation (1)

$$[Sn(60) - Zn(40)] + xLi^+ + xe \xrightarrow[\text{Discharge}]{\text{Charge}} [Sn(60) - Zn(40)]Li_x \qquad (1)$$

wherein [SN(60) − Zn(40)] $Li_x$, indicates tin-zinc-lithium alloy formed by charge.

As to the range of charge and discharge, the discharge is not required to be conducted until the lithium disappears completely from the negative electrode as in equation (1); it may be conducted such that the amount of lithium absorbed in the negative electrode is altered, as in equation (2).

$$[Sn(60) - Zn(40)]Li_x \times yLi^+ + ye \xrightarrow[\text{Discharge}]{\text{Charge}} [Sn(60) - Zn(40)]Li_{x+y} \qquad (2)$$

The negative electrode alloy of the present invention may be integrated into an electrochemical apparatus in the state of above-mentioned alloy. But it may also be integrated thereinto as an alloy which has absorbed active material-alkali metal, for example, a lithium alloy which has absorbed lithium. Further, instead of making the alloy absorb lithium electrochemically, it may be prepared as lithium alloy according to alloy formulation. The content of lithium then is the saturation amount which can be absorbed electrochemically as mentioned above. Though the saturation amount varied depending on alloy composition, it is about 20% by weight as content of lithium.

One example of the alloy for the negative electrode of this invention is a binary alloy of Zn and Bi, In, sn or Pb. In a binary alloy of Zn with Sn, In or Pb, the Zn content is preferably 20 to 80% by weight. For applications where charge-and-discharge life is important, a large content of Zn is preferable. But, for applications where high energy density is important, Zn content is preferably 20 to 70% by weight, particularly 30 to 60% by weight. A particularly preferable example is a Sn-Zn alloy comprising 30 to 60% by weight of Zn 70 to 40% by weight of Zn. In Bi-Zn alloys, Zn content is preferably 50 to 85% by weight.

3

As to a ternary, quarternary or more multiple component alloy, mention may be made of an alloy of Zn with at least two metals selected from the group consisting of Sn, Bi, Pb, and In. In this case, Zn content is preferably 20 to 80% by weight and the sum of the contents of the other components is preferably 80 to 25% by weight. A Zn content of 20 to 75% by weight is particularly preferable. When Bi is used, its content should be not higher than 50% by weight and is preferably as low as possible. Bi effectively helps alloying of Pb which alloys difficulty with Zn. Preferred examples are a Sn-Pb-Zn alloy comprising 30 to 60% by weight of Zn, 10 to 20% by weight of Pb and the remaining portion of Zn, a Sn-In-Zn alloy comprising 30 to 60% by weight of Zn, 3 to 10% by weight of In and the remaining portion of Sn, and Sn-Pb-In-Zn alloy comprising 30 to 60% by weight of Zn, 3 to 10% by weight of In, 10 to 20% by weight of Pb and the remaining portion of Sn.

In the above-mentioned Zn alloy, a part of Zn may be replaced with Cd. Combined use of Zn and Cd has a effect of somewhat increasing the quantity of electricity in charge and discharge. But, since Cd has a problem of possible environmental pollution, it is preferable not to use it.

Among the above-mentioned various alloys, Sn-Zn alloys are most practical from the viewpoint of performance and cost. Pb, In or Cd may be added thereto. Particularly, In facilitates the production of the electrode. A preferable content of In is 3 to 10% by weight.

As to a positive electrode for constituting a rechargeable electrochemical apparatus in combination with the negative electrode of this invention, those which have reversibility of charge-and-discharge are used. An example is a positive electrode having $MoO_3$, $TiS_2$, $V_6O_{13}$, $Cr_3O_8$, $TiO_2$, $WO_3$, $TaS_2$, $NaCrS_2$ or the like as active material.

A combination of a well-known carbonaceous electrode, such as a graphite electrode or an active-carbon electrode used in an electric double layer capacitor, with the negative electrode of this invention can be used also as a backup power source for a memory.

As to the nonaqueous electrolyte, organic electrolytes are favorable used. As the organic solvent and the alkali metal salt of solute, there may be used, respectively, well-known ones which are used in organic electrolyte batteries. Examples of the former include propylene carbonate, γ-butyrolactone, ethylene carbonate, 1,2-dimethoxyethane, tetrahydrofuran, 2-methyltetrahydrofuran and 1,3-dioxolan. Examples of the latter include lithium salts such as $LiClO_4$, $LiBF_4$, $LiAsF_6$, $LiSO_3CF_3$, and $LiPF_6$, sodium salts such as $NaClO_4$, and potassium salts such as $KPF_6$. These organic solvents and solutes can be used, respectively, each alone or in combination of plural thereof.

As to the nonaqueous electrolyte, there may also be used a solid electrolyte of alkali metal ion conductivity. As to an example of solid electrolyte, e.g. that of lithium ion conductivity, mention may be made of $Li_3N$ and $Li_2O \cdot Li_4SiO_4 \cdot Li_3PO_4$.

Brief Description of the Drawings

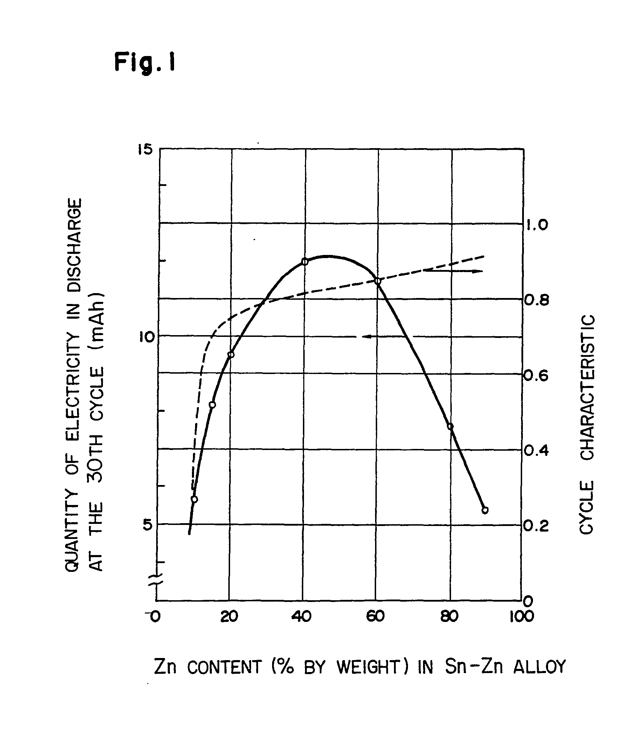

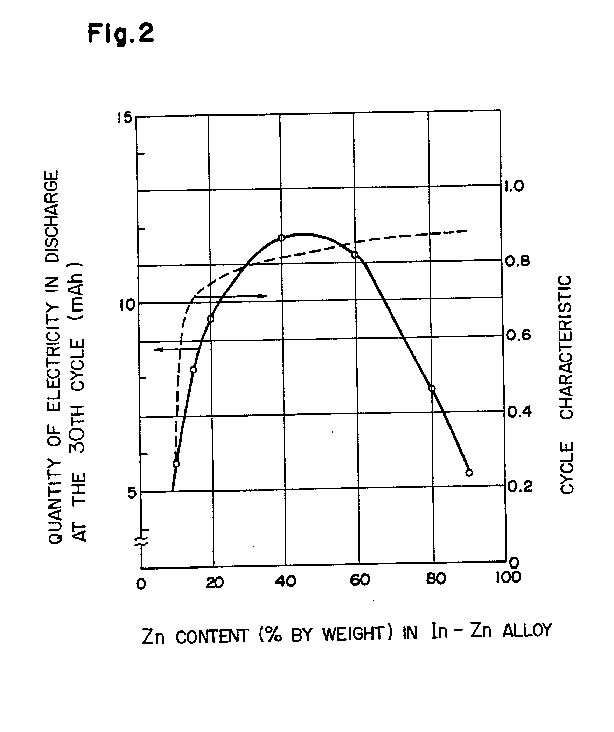

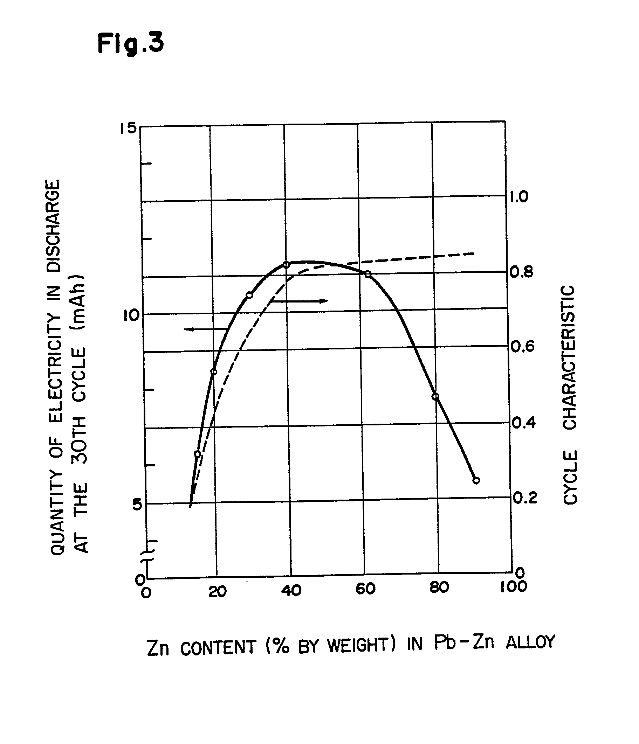

Fig. 1 shows, for Sn-Zn alloy, the relationship between Zn content of the alloy and the quantity of electricity in discharge as well as the cycle characteristic when said alloy is used as the negative electrode. Figs. 2, 3 and 4 shows, respectively for In-Zn alloy, Pb-Zn alloy and Bi-Zn alloy, the relationship between Zn content and the quantity of electricity in discharge as well as the cycle characteristic.

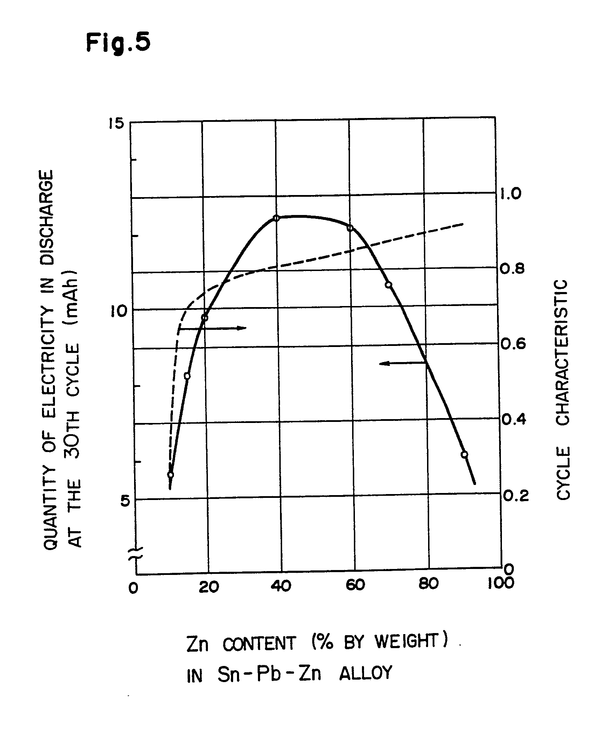

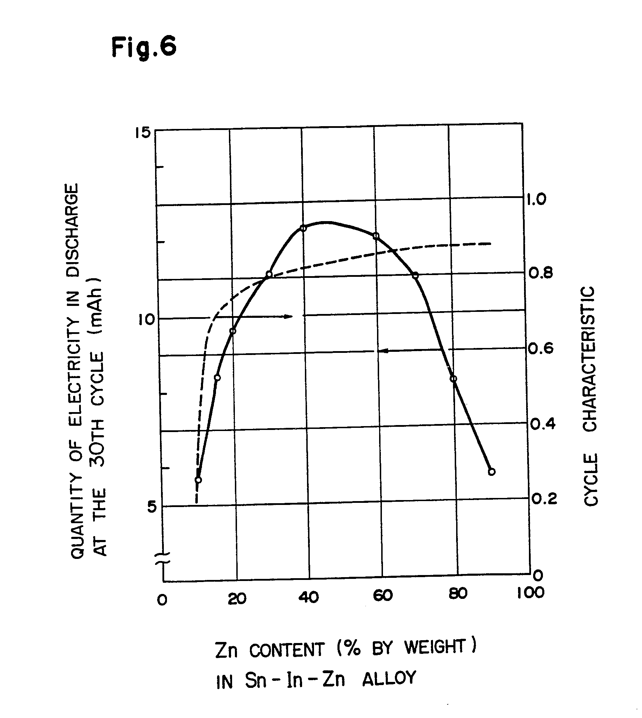

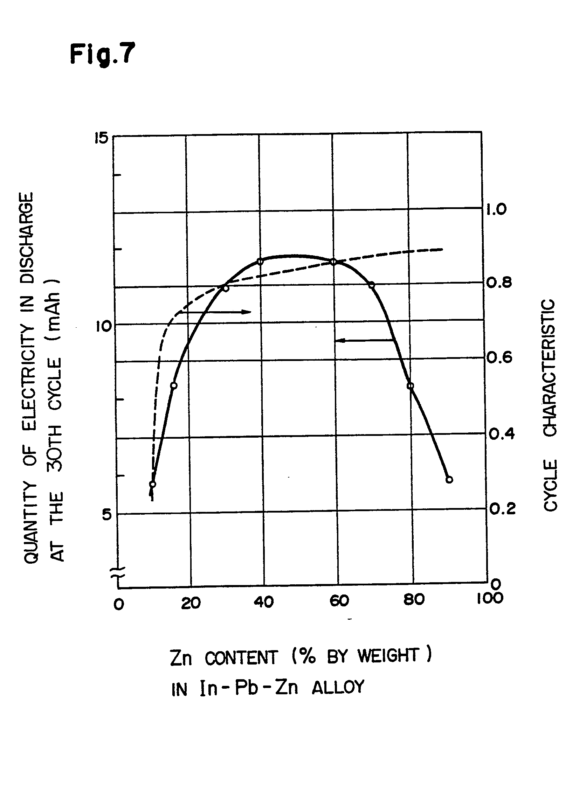

Fig. 5 shows, for Sn-Pb-Zn alloy (wherein weight ratio of Sn to Pb is 1:1), the relationship between Zn content and the quantity of electricity in discharge as well as the cycle characteristic. Figs. 6 and 7 show, respectively for Sn-In-Zn alloy (wherein weight ratio of Sn to In is 1:1) and for In-Pb-Zn alloy (wherein weight ratio of In to Pb is 1:1), the relationship between Zn content and the quantity of electricity in discharge as well as the cycle characteristic.

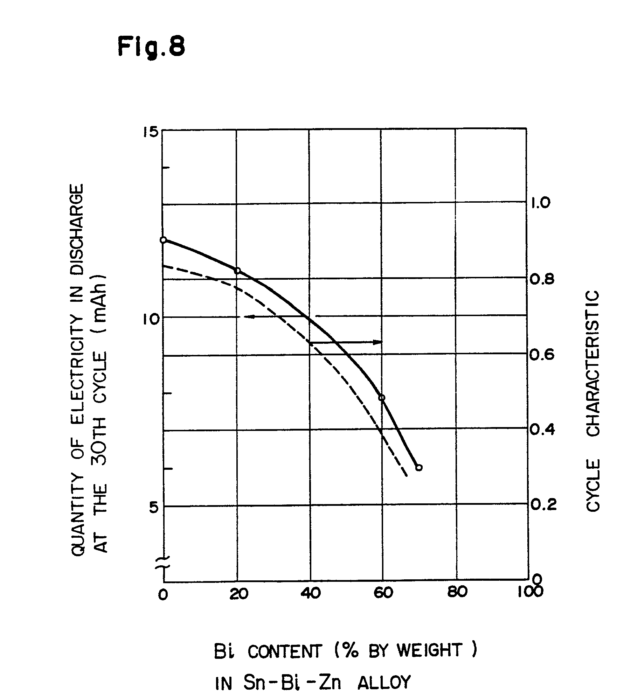

Fig. 8 shows, for Sn-Bi-Zn alloy (wherein weight ratio of Sn to Zn is 1:1), the relationship between Bi content and the quantity of electricity in discharge at the 30th cycle as well as the cycle characteristic.

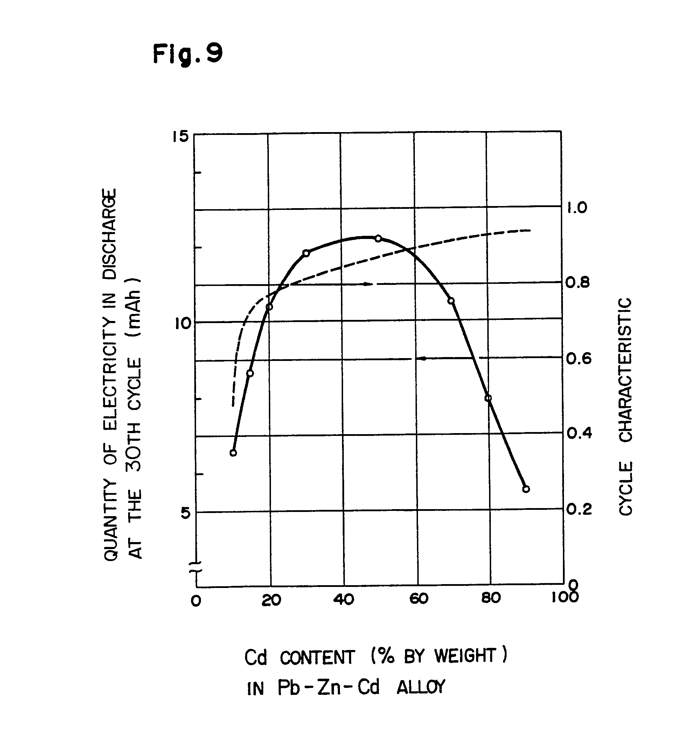

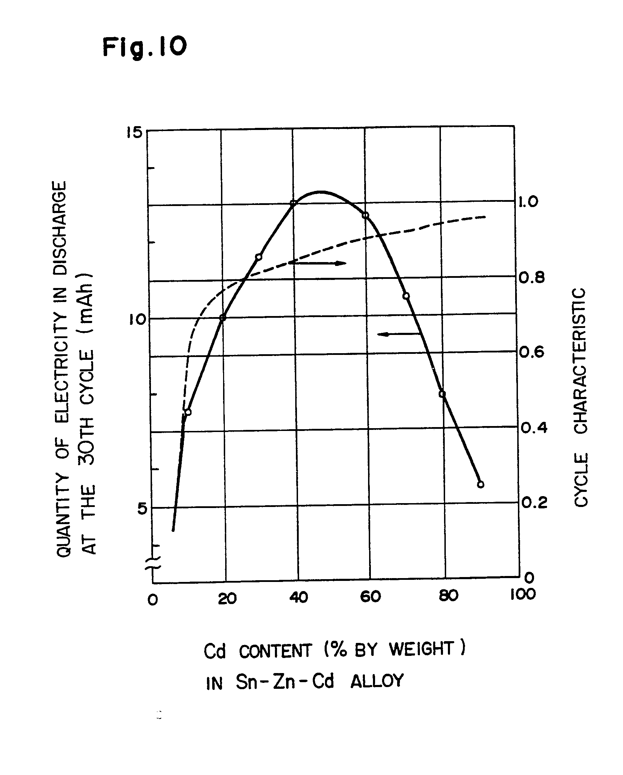

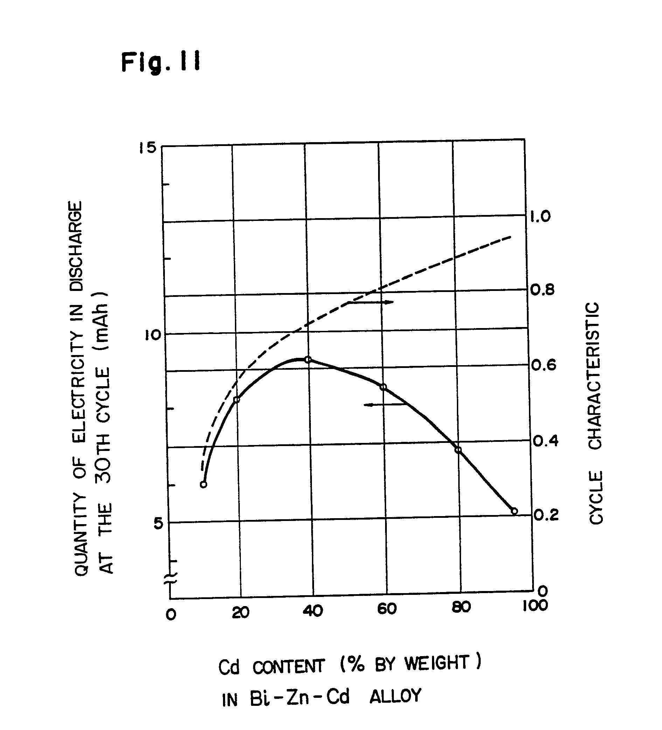

Fig. 9 shows, for Pb-Zn-Cd alloy (wherein weight ratio of Zn to Cd is 1:1), the relationship between the sum of the contents of Zn and Cd and the quantity of electricity in discharge as well as the cycle characteristic. Figs. 10 and 11 show, respectively for Sn-Zn-Cd alloy (wherein weight ratio of Zn to Cd is 1:1) and Bi-Zn-Cd alloy (wherein weight ratio of Zn to Cd is 1:1), the relationship between the sum of the contents of Zn and Cd and the quantity of electricity in discharge as well as the cycle characteristic.

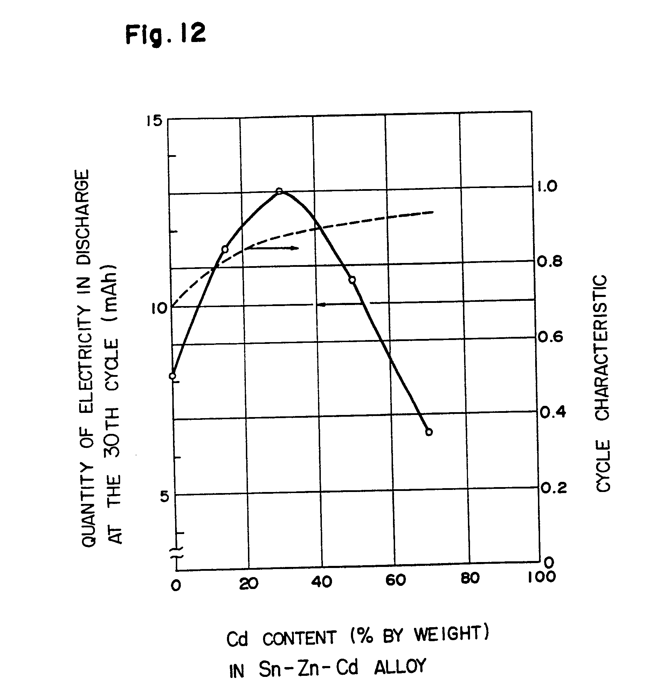

Fig. 12 shows, for Sn-Zn-Cd alloy (wherein Zn content is 15% by weight), the relationship between Cd content and the quantity of electricity in discharge as well as the cycle characteristic.

Best Mode for Carrying Out the Invention

The characteristics of the alloy of the present invention as a rechargeable negative electrode will be illustrated below in comparison with those of metals and alloys of Comparative Examples.

The apparatus used for evaluating the characteristics of the negative electrode was constituted of a batttery jar having a test electrode and an opposite electrode inserted therein, a battery jar having a reference electrode inserted therein, and a liquid connection bridge connecting the two jars. The electrolyte used was propylene carbonate containing 1 mol/l of lithium perchlorate ($LiClO_4$) dissolved therein. The test electrode used was prepared from various metals or alloys in 1 cm square and 1 mm thick; a nickel ribbon was fitted up to thereto as a lead wire. The opposite electrode used was a positive electrode containing $TiS_2$ as active material which enabled reversible charge and discharge; the reference electrode used was metallic lithium.

4

The test procedure was as follows: by using the test electrode and the opposite electrode as the negative and positive electrode, respectively, charge was conducted at a constant current of 3 mA until the potential of the test electrode reached 50 mV against that of the reference electrode; subsequently, discharge was conducted at a constant current of 3 mA until the potential of the test electrode reched 1.0 V against that of the reference electrode; the above charge-and-discharge was then conducted repeatedly.

Example 1

For various metals and alloys, were shown in Table the quantity of electricity in discharge at the 5th and the 30th cycle as well as, as cycle characteristic the quotient obtained by dividing the quantity of electricity at the 30th cycle by that at the 5th cycle.

When Sn, Pb, Bi and In were respectively used for a negative electrode as a simple metal, pulverization and falling off of the electrode occurred during the course of repeated charge-and-discharge cycle, and so it could not be used as a rechargeable electrode. Pulverization occurred also in the case of Ag. Al gave rise to pulverization and falling off during the charge of the 1st cycle.

On the other hand, the alloys of this invention (Nos. 1 to 12 and Nos, 14 to 19) gave rise to no pulverization of the electrode and gave a large value of cycle characteristics and a large quantity of electricity in discharge at the 30th cycle. The Sn-Cd alloy of Comparative Example (No. 13) gave rise to no pulverization of the electrode and showed a good current efficiency of 98 to 100% similarly to the alloy of this invention; but the quantity of electricity in discharge began to fall after about 20 cycles.

Zn or Cd undergoes no pulverization even after repeated charge-and-discharge and maintains stably the shape of the electrode, but gives a small quantity of electricity in discharge. Further, it showed a large difference in quantity of electricity in discharge, even for electrodes of fixed apparent surface area, depending on the roughness of the surface. It is considered that Zn or Cd has, by itself, only a small capacity of absorbing and desorbing lithium accompanying charge and discharge.

The reaction for the alloy of the present invention comprising Zn or Zn and Cd undergoing no pulverization even after repeated charge and discharge is considered that Zn or Cd is playing a role of a binder.

As is apparent from the Table, the quantity of electricity in discharge is large when alloys containing both Zn and Cd or multiple component alloys are used. This is presumably because the crystal grain interface of each component in the alloy exerts a great influence on the diffusion of lithium accompanying charge and discharge.

| No. | Alloy or metal | Quantity of electricity in discharge at 5th cycle (mAh) | Quantity of electricity in discharge at 30th cycle .(mAh) | Cycle characteristic |
|---|---|---|---|---|
| 1 | [Sn(60)-Zn(40)] | 14.9 | 12.0 | 0.81 |
| 2 | [In(60)-Zn(40)] | 14.3 | 11.7 | 0.82 |
| 3 | [Pb(60)-Zn(40)] | 14.5 | 11.3 | 0.78 |
| 4 | [Bi(30)-Zn(70)] | 11.6 | 8.4 | 0.72 |
| 5 | [Sn(30)-Pb(30)-Zn(40)] | 15.3 | 12.4 | 0.81 |
| 6 | [Sn(30)-In(30)-Zn(40)] | 15.0 | 12.3 | 0.82 |
| 7 | [Pb(30)-In(30)-Zn(40)] | 14.3 | 11.7 | 0.82 |
| 8 | [Sn(40)-Bi(20)-Zn(40)] | 14.4 | 11.2 | 0.78 |
| 9 | [Pb(40)-Bi(20)-Zn(40)] | 12.2 | 9.3 | 0.76 |
| 10 | [In(40)-Bi(20)-Zn(40)] | 13.2 | 10.3 | 0.78 |
| 11 | [Pb(50)-Zn(25)-Cd(25)] | 14.0 | 12.2 | 0.87 |
| 12 | [Sn(60)-Zn(20)-Cd(20)] | 15.3 | 13.0 | 0.85 |
| 13 | [Sn(60)-Cd(40)] | 18.4 | 7.2 | 0.39 |
| 14 | [Bi(60)-Zn(20)-Cd(20)] | 12.8 | 9.2 | 0.72 |

- to be continued :-

EP 0 139 756 B1

(Continued)

| No. | Alloy or metal | Quantity of electricity in discharge at 5th cycle (mAh) | Quantity of electricity in discharge at 30th cycle (mAh) | Cycle characteristic |
|-----|----------------|---------------------------------------------------------|----------------------------------------------------------|----------------------|
| 15 | [In(60)-Zn(20)-Cd(20)] | 14.7 | 12.5 | 0.85 |
| 16 | [Pb(30)-Sn(30)-Zn(20)-Cd(20)] | 16.0 | 14.2 | 0.89 |
| 17 | [Bi(30)-Sn(30)-Zn(20)-Cd(20)] | 14.6 | 11.7 | 0.80 |
| 18 | [Pb(30)-In(20)-Zn(20)-Cd(20)] | 16.0 | 14.4 | 0.90 |
| 19 | [Sn(30)-In(30)-Zn(20)-Cd(20)] | 16.5 | 15.2 | 0.92 |
| 20 | Sn | 2.2 | 0.53 | 0.24 |
| 21 | Zn | 1.2 | 1.1 | 0.92 |
| 22 | Cd | 1.3 | 1.2 | 0.92 |
| 23 | Pb | 2.5 | 0.23 | 0.09 |
| 24 | Bi | 2.2 | 0.16 | 0.07 |
| 25 | In | 2.0 | 0.21 | 0.11 |
| 26 | Ag | 10.3 | 1.2 | 0.12 |
| 27 | Al | 2.6 | 0.2 | 0.08 |

EP 0 139 756 B1

## Example 2

In this example there are illustrated the characteristics examined, in the same manner as in Example 1, of binary alloys of Zn with Sn, In or Pb.

Fig. 1 shows, for Sn-Zn alloy, the relationship between Zn content and the quantity of electricity in discharge at the 30th cycle as well as the cycle characteristic. Fig. 2 shows, for In-Zn alloy, the relationship between Zn content and the quantity of electricity in discharge at the 30th cycle as well as the cycle characteristic. Fig. 3 shows similar characteristics for Pb-Zn alloy.

These Figures reveal that when the content of Zn is small, the quantity of electricity in discharge is small and the cycle characteristic is poor. This is because pulverization of the electrode occurs as the result of charge and discharge. On the other hand, with increasing content of Zn the cycle characteristic is improved but the quantity of electricity in discharge is lowered. Thus, for Sn-Zn alloy, In-Zn alloy and Pb-Zn alloy, the content of Zn is preferably 20 to 70%, particularly 30 to 60%, when the quantity of electricity in discharge is taken into consideration. When charge-and-discharge cycle life is regarded as more important than the quantity of electricity in discharge, alloys with higher range of Zn content of up to 80% by weight may be used.

PB-Zn alloy is difficultly prepared by conventional methods. Accordingly, as will be described later, it is preferable to add thereto other components as Cd, Sn, In and Bi. In this Example, Pb-Zn alloy was prepared by means of spattering.

## Example 3

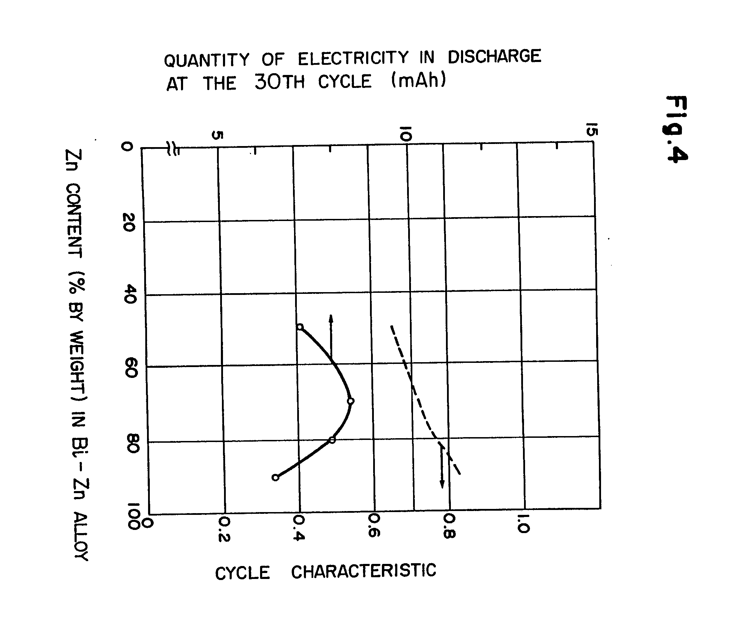

Fig. 4 shows, for Bi-Zn alloy, similar characteristics to those described above. Bi-Zn alloy is inferior to binary alloys shown in Example 2. Preferred content of Zn is 50 to 85% by weight, particularly 60 to 80% by weight; consequently, preferred content of Bi is 50 to 15% by weight, particularly 40 to 20% by weight.

## Example 4

In this Example there are illustrated, for alloys of Zn with at least two metals selected from the group consisting of Sn, Pb and In, similar characteristics to those described above.

Thus, Fig. 5 shows, for Sn-Pb-Zn alloys wherein weight ratio of Sn to Pb is 1:1, the relationship between the content of Zn and the quantity of electricity in discharge as well as the cycle characteristic. Fig. 6 shows, for Sn-In-Zn alloys wherein weight ratio of Sn to In is 1:1, the relationship between the content of Zn and the quantity of electricity in discharge at the 30th cycle as well as the cycle characteristic. Fig. 7 shows, for Pb-In-Zn alloys wherein the weight ratio of Pb to In is 1:1, the relationship between the content of Zn and the quantity of electricity in discharge at the 30th cycle as well as the cycle characteristic.

Also in these ternary alloys, the cycle characteristic is lowered as the content of Zn is decreased and the quantity of electricity in discharge is decreased as the content of Zn is increased. This is because Zn plays the role of a binder in the alloy. Preferred content of Zn in these alloys is 20 to 75% by weight, particularly 30 to 70% by weight. On the other hand, when charge-and-discharge cycle life is important, Zn content of up to 80% by weight may be used.

Sn-Pb-Zn alloy gives an increased quantity of electricity in discharge as compared with Sn-Zn alloy of Example 2. This is presumably because the diffusion of lithium along the phase interface in the alloy becomes easier as the number of components of the alloy increases.

The above example described the results obtained with alloys wherein the contents of two components other than Zn were equal. For Sn-Pb-Zn alloy, similar results to those mentioned above were obtained within a weight ratio range of Sn to Pb of 4:1 to 1:2. Also similar results to those mentioned above were obtained for Sn-In-Zn alloy in a weight ratio range of Sn to In of 1:9 to 9:1, and for Pb-In-Zn alloy in a weight ratio range of Pb to In of 3:1 to 1:9.

Thus, in Sn-In-Zn alloys, good characteristics are exhibited when Zn content is 20 to 70% by weight and the remaining portion is Sn and In, Sn/In ratio being in a range of 1/9 to 9/1. The reason that the ratio of Sn to In can be thus varied in a wide range is presumably that both Sn and Id alloy well with Zn. On the other hand, in alloys containing Pb, the ratios Pb/In and Sn/Pb cannot be varied so widely. This is because Pb alloys difficultly with Zn. Since Sn and In have a same function as mentioned above, a part of Sn in Sn-Pb-Zn alloy may be replaced with In, and a part of In in In-Pb-Zn alloy may be replaced with Sn.

## Example 5

The characteristics of alloys comprising Zn, Bi and at least one metal selected from the group consisting Sn, In and Pb will be described.

Fig. 8 shows, for Sn-Bi-Zn alloys comprising Zn and Sn in a weight ratio of Zn to Sn of 1:1, the relationship between the content of Bi and the quantity of electricity in discharge at the 30th cycle as well as the cycle characteristic. No particular effect is observed by addition of Bi to Sn-Zn alloy. Similar tendencies were observed also in In-Bi-Zn alloy and Pb-Bi-Zn alloy. The addition of Bi contributes to facilitating the alloying of Pb which is difficulty alloyed by itself with Zn; its content should be not more than 50% by weight and is preferably as small as possible.

## Example 6

The characteristics of alloys comprising Zn, Cd and at least one metal selected from the group consisting of Pb, Sn, Bi and In will be described.

Figs. 9, 10 and 11 show, for Pb-Zn-Cd alloy Sn-Zn-Cd alloy and Bi-Zn-Cd alloy respectively, the relationship between the sum of contents of Zn and Cd and the quantity of electricity in discharge at the 30th cycle as well as the cycle characteristic. In each of the alloys the weight ratio of Zn to Cd was fixed at 1:1.

Figs. 9 and 10 reveal that, for Pb-Zn-Cd alloy and Sn-Zn-Cd alloy, good characteristics are exhibited when the sum of contents of Zn and Cd is in a range of 15 to 75% by weight. Bi-Zn-Cd alloy, although inferior to the above-mentioned alloy in the quantity of electricity in discharge, show good characteristics when the sum of contents of Zn and Cd is in a range of 15 to 75% by weight. In these alloys also, when charge-and-discharge cycle life is regarded as important, a sum of contents of Zn and Cd of up to 80% by weight is allowable.

Next, when Sn-Zn alloy of Fig. 1 is compared with Sn-Zn-Cd alloy of Fig. 10, it can be seen that the latter alloy wherein a part of Zn has been replaced with Cd shows improved quantity of electricity in discharge and cycle characteristic. When Sn-Cd alloy (No. 13) and Sn-Zn-Cd alloy (No. 12) shown in the above-mentioned Table are compared with each other, the latter shows superior performance. From these facts it can be said that, though Zn and Cd each play a role of a binder in the alloy, the performance of alloy is improved by incorporating both of them thereinto.

In-Zn-Cd alloy showed characteristics similar to those of Sn-Zn-Cd alloy, and exhibited good characteristics when the sum of contents of Zn and Cd was in a range of 15 to 75% by weight.

Example 7

The characteristics of alloys comprising both Zn and Cd, the proportion of Cd being varied, will be described.

Fig. 12 shows characteristics of Sn-Zn-Cd alloy wherein the content of Zn is fixed and the content of Cd is varied. A Cd content of 50% by weight or less is preferable.

Also, in In-Zn-Cd alloy and Pb-Zn-Cd alloy, good characteristics were exhibited at a Cd content of 50% by weight or less when the content of Zn was fixed at 15% by weight.

In the above Examples were shown the characteristics of alloy negative electrodes in an electrochemical cell comprising a combination of a specified positive electrode and electrolyte. But the positive electrode and the electrolyte are not restricted thereto. As the negative electrode active material, examples were described wherein lithium, most common and most practical, was used. But the alloy of this invention acts as a rechargeable negative electrode also when sodium or potassium is used as negative-electrode active material.

Possibility of Industrial Utilization

The alloy of the present invention reversibly absorbs and desorbs alkali metal ions, as the result of charge and discharge, in nonaqueous electrolyte containing alkali metal ions, so that it endures repeated charge-and-discharge and gives a rechargeable negative electrode having a long charge-and-discharge life. Accordingly, it can be utilized in a rechargeable electrochemical apparatus including, particularly, a secondary battery using lithium as negative-electrode active material. Further, by suitable choice of alloy composition a secondary battery of high energy density can be obtained.

**Claims**

1. A method of forming a rechargeable electrochemical apparatus employing a non-aqueous electrolyte and alkali metal ions for charge transfer, the method including the steps of:—
    a) forming a negative electrode for the apparatus,
    b) forming a positive electrode,
    c) locating the positive and negative electrodes in spaced relationship electrochemically linked by a non-aqueous electrolyte, characterised in that the negative electrode is formed as a generally homogeneous body from an alloy comprising less than 20% by weight of said alkali metal, zinc or zinc and cadmium, and at least one metal selected from Sn, Pb, In and Bi, and the whole alkali metal contained in the alloy forms intermetallic compounds with other metal components.

2. A rechargeable electrochemical apparatus employing a non-aqueous electrolyte and alkali metal ions for charge transfer, the apparatus comprising a positive electrode, a negative electrode, and a non-aqueous electrolyte electrochemically linked said positive and negative electrodes characterised in that the negative electrode is formed as a generally homogeneous body from an alloy comprising less than 20% by weight of said alkali metal, zinc or zinc and cadium, and at least one metal selected from Sn, Pb, In and Bi, and the whole alkali metal contained in the alloy forms intermetallic compounds with other metal components.

3. Apparatus as claimed in claim 2 wherein the content of Zn in said alloy is 20% to 80% by weight.

4. Apparatus as claimed in claim 3 wherein said alloy is a Pb-Sn-Zn alloy and the content of Pb is 10% to 20% by weight.

5. Apparatus as claimed in claim 3 wherein the content of Zn in said alloy is 30% to 60% by weight.

6. Apparatus as claimed in claim 3 wherein said alloy is a Sn-In-Zn alloy the weight ratio of Sn to In being 1/9 to 9/1.

7. Apparatus as claimed in claim 3 wherein said alloy is a Sn-Pb-Zn alloy the weight ratio of Sn to Pb being 4/1 to 1/2.

8. Apparatus as claimed in claim 3 wherein said alloy is a Pb-In-Zn alloy the weight ratio of Pb to In being 3/1 to 1/9.

9. Apparatus as claimed in claim 3 wherein two metals from said group are selected and the alloy comprises 50% by weight or less of Bi.

10. Apparatus as claimed in claim 2 wherein the sum content of Zn and Cd in said alloy is 15% to 80% in weight.

11. Apparatus as claimed in claim 10 wherein the content of Cd is 50% by weight or less.

12. Apparatus as claimed in claim 3 or claim 5 wherein the alloy is a Sn-Zn-In alloy and the content of In is 3 to 10% by weight.

13. Apparatus as claimed in claim 3 or claim 5, wherein the alloy is Pb-Sn-Zn-In alloy and the content of Pb is 10 to 20% by weight and the content of In is 3 to 10% by weight.

14. Apparatus as claimed in claim 2 wherein said alloy comprises Sn-Zn-Cd and the sum content of Zn and Cd in said alloy is 20 to 80% by weight.

15. Apparatus as claimed in claim 14 wherein the sum contents of Zn and Cd in said alloy is 30 to 60% by weight.

16. Apparatus as claimed in claim 15 wherein the content of Cd is 10% to 20% by weight.

17. Apparatus as claimed in claim 2 wherein said alloy is Pb-Sn-Zn-Cd alloy and the sum content of Zn and Cd is 20 to 80% by weight.

18. Apparatus as claimed as in claim 17 wherein the sum contents of Zn and Cd is 30 to 60% by weight and the content of Pb is 10 to 20% by weight.

19. Apparatus as claimed in claim 18 wherein the content of Cd is 10 to 20% by weight.

20. Apparatus as claimed in claim 2 wherein the alloy is an Sn-Zn-Cd-In alloy and the sum content of Zn and Cd in said alloy is 30 to 60% by weight.

21. Apparatus as claimed in claim 20 wherein the content of Cd is 10 to 20% by weight and the content of the In is 3 to 10% by weight.

22. Apparatus as claimed in claim 2 wherein the alloy is Pb-Zn-Sn-Cd-In alloy and the sum content of Zn and Cd is 20 to 80% by weight.

23. Apparatus as claimed in claim 22 wherein the sum content of Zn and Cd is 30 to 60% by weight and the content of Pb is 10 to 20% by weight.

24. Apparatus as claimed in claim 23 wherein the content of In is 3 to 10% by weight and the content of Cd is 10 to 20% by weight.

25. Apparatus as claimed in any one of claims 2 to 24 wherein said alkali metal is lithium and said alkali metal ions are lithium ions.

**Patentansprüche**

1. Verfahren zur Herstellung einer wiederaufladbaren elektrochemischen vorrichtung unter Verwendung eines nichtwäßrigen Elektrolyten und von Alkalimetallionen für die Ladungsübertragung, das die folgenden Stufen umfaßt:
   (a) Bildung einer negativen Elektrode für die Vorrichtung,
   (b) Bildung einer positiven Elektrode,
   (c) Anordnung der positiven Elektrode und der negativen Elektrode im Abstand voneinander, jedoch elektrochemisch miteinander verbunden durch einen nicht-wäßrigen Elektrolyten, dadurch gekennzeichnet, daß die negative Elektrode als generell homogener Körper aus einer Legierung ausgebildet ist, die weniger als 20 Gew.-% Alkalimetall, Zink oder Zink und Cadmium und mindestens ein Metall aus der Gruppe Sn, Pb, In und Bi enthält, wobei das gesamte Alkalimetall, das in der Legierung enthalten ist, mit den anderen Metallkomponenten intermetallische Verbindungen bildet.

2. Wiederaufladbare elektrochemische Vorrichtung, in der ein nicht-wäßriger Elektrolyt und Alkalimetallionen für die Ladungsübertragung verwendet werden, die umfaßt eine positive Elektrode, eine negative Elektrode und einen nicht-wäßrigen Elektrolyten, der die positive Elektrode und die negative Elektrode elektrochemisch miteinander verbindet, dadurch gekennzeichnet, daß die negative Elektrode als ein generell homogener Körper aus einer Legierung ausgebildet ist, die weniger als 20 Gew.-% Alkalimetall, Zink oder Zink und Cadmium und mindestens ein Metall aus der Gruppe Sn, Pb, In und Bi enthält, wobei das gesamte Alkalimetall, das in der Legierung enthalten ist, mit den anderen Metallkomponenten intermetallische Verbindungen bildet.

3. Vorrichtung nach Anspruch 2, worin der Zn-Gehalt in der Legierung 20 bis 80 Gew.-% beträgt.

4. Vorrichtung nach Anspruch 3, worin die Legierung eine Pb-Sn-Zn-Legierung ist und ihr Pb-Gehalt 10 bis 20 Gew.-% beträgt.

5. Vorrichtung nach Anspruch 3, worin der Zn-Gehalt in der Legierung 30 bis 60 Gew.-% beträgt.

6. Vorrichtung nach Anspruch 3, worin die Legierung eine Sn-In-Zn-Legierung ist, in der das Gewichts-verhältnis Sn:In 1:9 bis 9:1 beträgt.

7. Vorrichtung nach Anspruch 3, worin die Legierung eine Sn-Pb-Zn-Legierung ist, in der das Gewichtsverhältnis Sn:Pb 4:1 bis 1:2 beträgt.

8. Vorrichtung nach Anspruch 3, worin die Legierung eine Pb-In-Zn-Legierung ist, in der das Gewichtsverhältnis Pb:In 3:1 bis 1:9 beträgt.

9. Vorrichtung nach Anspruch 3, worin zwei Metalle aus der genannten Gruppe ausgewählt werden und die Legierung 50 Gew.-% oder weniger Bi enthält.

10. Vorrichtung nach Anspruch 2, worin die Summe der Gehalte an Zn und Cd in der Legierung 15 bis 80 Gew.-% beträgt.

11. Vorrichtung nach Anspruch 10, worin der Cd-Gehalt 50 Gew.% oder weniger beträgt.

12. Vorrichtung nach Anspruch 3 oder 5, worin die Legierung eine Sn-Zn-In-Legierung ist und ihr In-Gehalt 3 bis 10 Gew.-% beträgt.

13. Vorrichtung nach Anspruch 3 oder 5, worin die Legierung eine Pb-Sn-Zn-In-Legierung ist und ihr Pb-Gehalt 10 bis 20 Gew.-% und ihr In-Gehalt 3 bis 10 Gew.-% betragen.

14. Vorrichtung nach Anspruch 2, worin die Legierung eine Sn-Zn-Cd-Legierung ist und die Summe der Gehalte an Zn und Cd in dieser Legierung 20 bis 80 Gew.-% beträgt.

15. Vorrichtung nach Anspruch 14, worin die Summe der Gehalte an Zn und Cd in dieser Legierung 30 bis 60 Gew.-% beträgt.

16. Vorrichtung nach Anspruch 15, worin der Cd-Gehalt 10 bis 20 Gew.-% beträgt.

17. Vorrichtung nach Anspruch 2, worin die Legierung eine Pb-Sn-Zn-Cd-Legierung ist und die Summe ihrer Gehalte an Zn und Cd 20 bis 80 Gew.-% beträgt.

18. Vorrichtung nach Anspruch 17, worin die Summe der Gehalte an Zn und Cd 30 bis 60 Gew.-% beträgt und ihr Pb-Gehalt 10 bis 20 Gew.-% beträgt.

19. Vorrichtung nach Anspruch 18, worin der Cd-Gehalt 10 bis 20 Gew.-% beträgt.

20. Vorrichtung nach Anspruch 2, worin die Legierung eine Sn-Zn-Cd-In-Legierung ist und die Summe der Gehalte an Zn und Cd in dieser Legierung 30 bis 60 Gew.-% beträgt.

21. Vorrichtung nach Anspruch 20, worin der Cd-Gehalt 10 bis 20 Gew.-% und der In-Gehalt 3 bis 10 Gew.-% betragen.

22. Vorrichtung nach Anspruch 2, worin die Legierung eine Pb-Zn-Sn-Cd-In-Legierung ist und die Summe ihrer Gehalte an Zn und Cd 20 bis 80 Gew.-% beträgt.

23. Vorrichtung nach Anspruch 22, worin die Summe der Gehalte an Zn und Cd 30 bis 60 Gew.-% beträgt und der Pb-Gehalt 10 bis 20 Gew.-% beträgt.

24. Vorrichtung nach Anspruch 23, worin der In-Gehalt 3 bis 10 Gew.-% und der Cd-Gehalt 10 bis 20 Gew.-% betragen.

25. Vorrichtung nach einem der Ansprüche 2 bis 24, worin das Alkalimetall Lithium ist und die Alkalimetallionen Lithiumionen sind.

## Revendications

1. Procédé de fabrication d'un appareil électrochimique rechargeable utilisant un électrolyte non aqueux et des ions de métal alcalin pour le transfert de charge, ce procédé comprenant les étapes consistant

   a) à fabriquer une électrode négative pour l'appareil,

   b) à fabriquer une électrode positive,

   c) à placer les électrodes positive et négative à distance l'une de l'autre en les reliant électrochimiquement par un électrolyte non aqueux, caractérisé en ce que l'électrode négative est fabriquée sous forme de corps généralement homogène à partir d'un alliage comprenant moins de 20% en poids dudit métal alcalin, du zinc ou du zinc et du cadmium et au moins un métal choisi parmi Sn, Pb, In et Bi, la totalité du métal alcalin contenu dans l'alliage formant des composés intermétalliques avec les autres composants métalliques.

2. Appareil électrochimique rechargeable utilisant un électrolyte non aqueux et des ions de métal alcalin pour le transfert de charge, cet appareil comprenant une électrode positive, une électrode négative et un électrolyte non aqueux reliant électrochimiquement lesdites électrodes positive et négative, caractérisé en ce que l'électrode négative est fabriquée sous forme de corps généralement homogène à partir d'un alliage comprenant moins de 20% en poids dudit métal alcalin, du zinc ou du zinc et du cadmium et au moins un métal choisi parmi Sn, Pb, In et Bi, la totalité du métal alcalin contenu dans l'alliage formant des composés intermétalliques avec les autres composants métalliques.

3. Appareil selon la revendication 2, dans lequel la teneur dudit alliage en Zn est de 20% à 80% en poids.

4. Appareil selon la revendication 3, dans lequel ledit alliage est un alliage Pb-Sn-Zn, sa teneur en Pb étant de 10% à 20% en poids.

5. Appareil selon la revendication 3, dans lequel la teneur dudit alliage en Zn est de 30% à 60% en poids.

6. Appareil selon la revendication 3, dans lequel ledit alliage est un alliage Sn-In-Zn, le rapport pondéral de Sn à In étant compris entre 1/9 et 9/1.

7. Appareil selon la revendication 3, dans lequel ledit alliage est un alliage Sn-Pb-Zn, le rapport pondéral de Sn à Pb étant compris entre 4/1 et 1/2.

8. Appareil selon la revendication 3, dans lequel ledit alliage est un alliage Pb-In-Zn, le rapport pondéral de Pb à In étant compris entre 3/1 et 1/9.

9. Appareil selon la revendication 3, dans lequel deux métaux sont choisis dans ledit groupe et l'alliage comprend 50% en poids ou moins de Bi.

10. Appareil selon la revendication 2, dans lequel la somme des teneurs dudit alliage en Zn et Cd est de 15% à 80% en poids.

11. Appareil selon la revendication 10, dans lequel la teneur en Cd est de 50% en poids ou moins.

12. Appareil selon la revendication 3 ou 5, dans lequel l'alliage est un alliage Sn-Zn-In, sa teneur en In étant de 3 à 10% en poids.

13. Appareil selon la revendication 3 ou 5, dans lequel l'alliage est un alliage Pb-Sn-Zn-In, sa teneur en Pb étant de 10 à 20% en poids et sa teneur en In étant de 3 à 10% en poids.

14. Appareil selon la revendication 2, dans lequel ledit alliage comprend Sn-Zn-Cd, la somme des teneurs dudit alliage en Zn et Cd étant comprise entre 20 et 80% en poids.

15. Appareil selon la revendication 14, dans lequel la somme des teneurs dudit alliage en Zn et Cd est comprise entre 30 et 60% en poids.

16. Appareil selon la revendication 15, dans lequel la teneur en Cd est de 10% à 20% en poids.

17. Appareil selon la revendication 2, dans lequel ledit alliage est un alliage Pb-Sn-Zn-Cd, la somme des teneurs en Zn et Cd étant comprise entre 20 et 80% en poids.

18. Appareil selon la revendication 17, dans lequel la somme des teneurs en Zn et Cd est comprise entre 30 et 60% en poids et la teneur en Pb est de 10 à 20% en poids.

19. Appareil selon la revendication 18, dans lequel la teneur en Cd est de 10 à 20% en poids.

20. Appareil selon la revendication 2, dans lequel l'alliage est un alliage Sn-Zn-Cd-In, la somme des teneurs dudit alliage en Zn et Cd étant comprise entre 30 et 60% en poids.

21. Appareil selon la revendication 20, dans lequel la teneur en Cd est de 10 à 20% en poids et la teneur en In est de 3 à 10% en poids.

22. Appareil selon la revendication 2, dans lequel l'alliage est un alliage Pb-Zn-Sn-Cd-In, la somme des teneurs en Zn et Cd étant comprise entre 20 et 80% en poids.

23. Appareil selon la revendication 22, dans lequel la somme des teneurs en Zn et Cd est comprise entre 30 et 60% en poids et la teneur en Pb est de 10 à 20% en poids.

24. Appareil selon la revendication 23, dans lequel la teneur en In est de 3 à 10% en poids et la teneur en Cd est de 10 à 20% en poids.

25. Appareil selon l'une quelconque des revendications 2 à 24, dans lequel ledit métal alcalin est le lithium et lesdits ions de métal alcalin sont des ions lithium.

Fig.1

QUANTITY OF ELECTRICITY IN DISCHARGE AT THE 30TH CYCLE (mAh)

CYCLE CHARACTERISTIC

Zn CONTENT (% BY WEIGHT) IN Sn−Zn ALLOY

## Fig.2

QUANTITY OF ELECTRICITY IN DISCHARGE AT THE 30TH CYCLE (mAh)

CYCLE CHARACTERISTIC

Zn CONTENT (% BY WEIGHT) IN In – Zn ALLOY

# Fig.3

QUANTITY OF ELECTRICITY IN DISCHARGE AT THE 30TH CYCLE (mAh)

CYCLE CHARACTERISTIC

Zn CONTENT (% BY WEIGHT) IN Pb−Zn ALLOY

# Fig.4

QUANTITY OF ELECTRICITY IN DISCHARGE
AT THE 30TH CYCLE (mAh)

CYCLE CHARACTERISTIC

Zn CONTENT (% BY WEIGHT) IN Bi – Zn ALLOY

EP 0 139 756 B1

Fig.5

QUANTITY OF ELECTRICITY IN DISCHARGE
AT THE 30TH CYCLE (mAh)

CYCLE CHARACTERISTIC

Zn CONTENT (% BY WEIGHT)
IN Sn-Pb-Zn ALLOY

# Fig.6

QUANTITY OF ELECTRICITY IN DISCHARGE AT THE 30TH CYCLE (mAh)

CYCLE CHARACTERISTIC

Zn CONTENT (% BY WEIGHT) IN Sn – In – Zn ALLOY

## Fig.7

QUANTITY OF ELECTRICITY IN DISCHARGE AT THE 30TH CYCLE (mAh)

CYCLE CHARACTERISTIC

Zn CONTENT (% BY WEIGHT) IN In-Pb-Zn ALLOY

# Fig.8

CYCLE CHARACTERISTIC

QUANTITY OF ELECTRICITY IN DISCHARGE AT THE 30TH CYCLE (mAh)

Bi CONTENT (% BY WEIGHT) IN Sn-Bi-Zn ALLOY

Fig.9

QUANTITY OF ELECTRICITY IN DISCHARGE AT THE 30TH CYCLE (mAh)

CYCLE CHARACTERISTIC

Cd CONTENT (% BY WEIGHT)
IN Pb-Zn-Cd ALLOY

9

## Fig.10

QUANTITY OF ELECTRICITY IN DISCHARGE AT THE 30TH CYCLE (mAh)

CYCLE CHARACTERISTIC

Cd CONTENT (% BY WEIGHT)
IN Sn−Zn−Cd ALLOY

EP 0 139 756 B1

# Fig. 11

QUANTITY OF ELECTRICITY IN DISCHARGE
AT THE 30TH CYCLE (mAh)

CYCLE CHARACTERISTIC

Cd CONTENT (% BY WEIGHT)
IN Bi-Zn-Cd ALLOY

# Fig. 12

Cd CONTENT (% BY WEIGHT)
IN Sn-Zn-Cd ALLOY